# EUROPEAN PATENT SPECIFICATION

(11) **EP 1 708 520 B1**
(45) Date of publication and mention of the grant of the patent: **01.12.2010**
(21) Application number: 06006005.0
(22) Date of filing: 23.03.2006
(51) Int. Cl.: H04B 1/40, H04W 88/08

(54) **Baseband signal processing module with interfaces to other baseband signal processing modules and to a radio frequency signal processing module**
Modul zur Basisband-Signalverarbeitung mit Schnittstellen zu anderen Modulen zur Basisband-Signalverarbeitung und zu einem Modul zur HF-Verarbeitung
Un module pour le traitement en bande de base avec interfaces à d'autres modules pour le traitement en bande de base et à un module pour le traitement de fréquences radio

(30) Priority: 28.03.2005 JP 2005091936
(43) Date of publication of application: 04.10.2006
(73) Proprietor: NEC Corporation, Minato-ku Tokyo 108-8001 (JP); NTT DoCoMo, Inc., Tokyo 100-6150 (JP)
(72) Inventor: Yagawa, Kenichiro, Minato-ku Tokyo (JP)
(74) Representative: Vossius & Partner

(56) References cited:
- EP-A- 1 176 753
- EP-A- 1 450 572
- WO-A-2005/081563
- US-A- 5 579 341
- US-A1- 2002 141 512
- "Common Public Radio Interface (CPRI); Interface Specification" CPRI SPECIFICATION V1.0, 30 September 2003 (2003-09-30), pages 1-54, XP002291001

## Description

The present invention relates to a configuration of base station equipment.

In the case of W-CDMA (Wideband-Code Division Multiple Access) base stations, a section for performing a baseband signal processing and a section for performing a RF (Radio Frequency) signal process are configured separately from each other in many cases. For example, there is a W-CDMA base station configuration, in accordance with which the W-CDMA base station includes a plurality of BB (Baseband) panels for performing the baseband signal processing and a plurality of RF panels for performing the RF signal processing, the BB panels and the RF panels are connected to each other with cables, and the BB panels and the RF panels transmit, and receive, high-speed digital signals bi-directionally.

In this case, each BB panel is connected to the plurality of RF panels with a one-to-N ratio in conventional W-CDMA base station equipment (see JP-A-2004-222088).

In the case of the conventional W-CDMA base station as described above, when the equipment is intended to be reinforced, for example, in order to cope with an increasing number of users, cables with which BB panels and RF panels are connected to each other with a one-to-N ratio need to be additionally provided as well, and the reinforced work is complicated.

EP 1 450 572 A1 discloses a mobile communication base station apparatus comprising a plurality of radio transmission and reception sections, as well as baseband processing sections comprising adding means, dropping means and router means. WO 2005/081563 A1 (does not form pre-published state of the art) discloses a device comprising several functionally identical and different units and corresponding interfaces enabling a plurality of data types to be transmitted.

An object of the present invention is to provide base station equipment to which a processing module for performing a baseband signal processing is additionally provided easily. This object is achieved with the features of the claims.

Accordingly, this makes it possible to easily realize redundancy without providing the base station equipment with a special function. That is because, according to an aspect of the present invention, the selection/demultiplex/multiplex module monitors conditions of the plurality of baseband signal processing modules constituting their redundancy or the RF signal processing modules constituting their redundancy, and controls the redundancy configuration on the basis of a result of the monitoring.

In the case of the present invention, connection of a baseband signal processing module to an existing baseband signal processing module makes it possible to provide an additional baseband signal processing module easily without additionally providing cable connection between the baseband signal processing module and a RF signal processing module.

Descriptions will be provided for the exemplary embodiments for carrying out the invention with reference to the drawings.
Fig. 1 is a block diagram showing a configuration of W-CDMA base station equipment according to a first exemplary embodiment.
Fig. 2 is a block diagram showing a configuration of a BB panel according to the first exemplary embodiment.
Fig. 3 is a block diagram showing a configuration of a RF panel according to the first exemplary embodiment.
Fig. 4 is a downlink signal processing flow of the BB panel according to the first exemplary embodiment.
Fig. 5 is a uplink signal processing flow of the BB panel according to the first exemplary embodiment.
Fig. 6 is a block diagram showing a configuration of W-CDMA base station equipment according to a second exemplary embodiment.
Fig. 7 is a block diagram showing a configuration of a SMD panel according to the second exemplary embodiment.

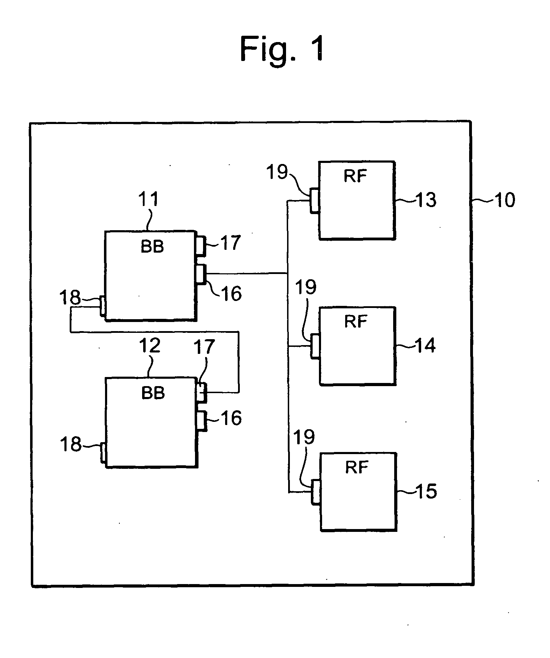

Fig. 1 is a block diagram showing a configuration of W-CDMA base station equipment according to a first exemplary embodiment of the present invention. As shown in Fig. 1, the base station equipment 10 includes baseband signal processing modules and radio frequency signal processing modules, which may be provided as BB panels 11 to 12 and RF panels 13 to 15, respectively. The BB panels 11 to 12 are panels for processing baseband signals. The RF panels 13 to 15 are panels for processing RF signals. Baseband signal processing includes a channelization coding processing and a scramble coding processing. RF signal processing includes modulation, demodulation and amplification.

The BB panels 11 and 12 have the same configurations. Each BB panel has a RF panel interface 16 through which the BB panel is connected with the RF panels, and additionally has two BB panel interfaces 17 and 18 through which the BB panel is connected with other BB panels respectively. The RF panels 13 to 15 have the same configurations. Each RF panel has a BB panel interface 19 through which the RF panel is connected with one of the BB panels. The BB panel 11 is connected with the RF panels 13 to 15 with a one-to-three ratio. The BB panel 12 is connected to the BB panel 11. For instance, each connection is provided with a duplex cable.

The BB panel interface 17 is an interface enabling the BB panel to be connected to the RF panels 13 to 15 through the other BB panel connected to the interface. The BB panel interface 18 is an interface through which the other BB panel connected to the interface 18 is connected with the RF panels 13 to 15, which are connected to the RF panel interface 16.

For example, suppose a case where the BB panel 12 is additionally provided to a situation where only the BB panel 11 exists. The BB panel interface 17 of the BB panel 12 is required to be connected to the BB panel interface 18 of the existing BB panel 11. Cables for connecting the additionally-provided BB panel 12 with the RF panels 13 to 15 need not be additionally provided.

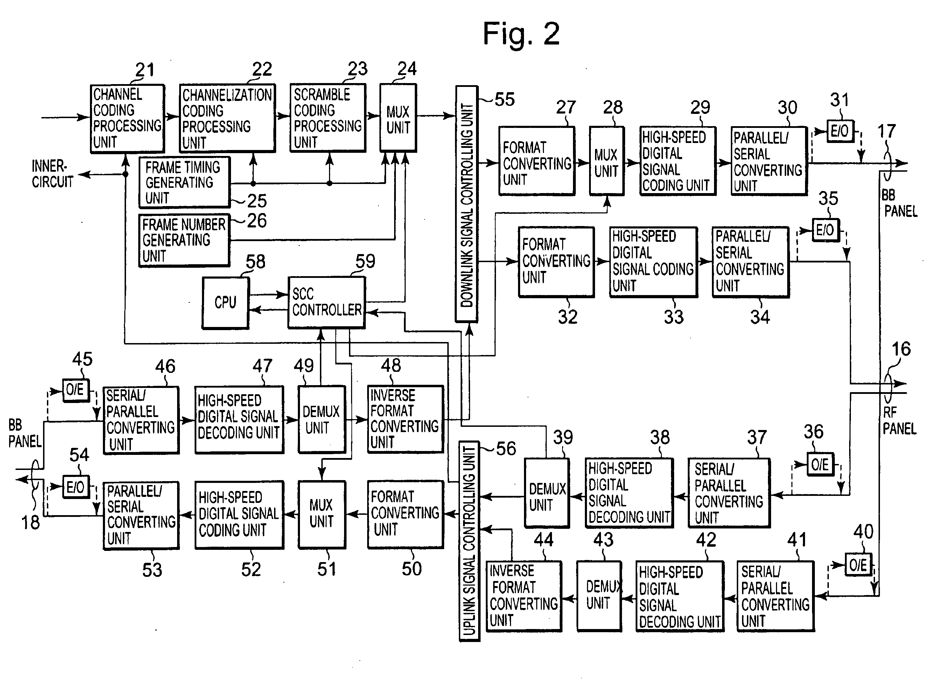

Fig. 2 is a block diagram showing a configuration of each of the BB panels according to this exemplary embodiment. As shown in Fig. 2, each of the BB panels 11 and 12 includes a channel coding processing unit 21, a channelization coding processing unit 22, a scramble coding processing unit 23, a multiplex (MUX) unit 24, a frame timing generating unit 25, a frame number generating unit 26, a format converting unit 27, a MUX unit 28, a high-speed digital signal coding unit 29, a parallel/serial converting unit 30, an electric signal/optical signal converting unit (E/O) 31, a format converting unit 32, a high-speed digital signal coding unit 33, a parallel/serial converting unit 34, an E/O 35, an optical signal/electric signal converting unit (O/E) 36, a serial/parallel converting unit 37, a high-speed digital signal decoding unit 38, a demultiplex (DEMUX) unit 39, an O/E 40, a serial/parallel converting unit 41, a high-speed digital signal decoding unit 42, a DEMUX unit 43, an inverse format converting unit 44, an O/E 45, a serial/parallel converting unit 46, a high-speed digital signal decoding unit 47, a DEMUX unit 49, an inverse format converting unit 48, a format converting unit 50, a MUX unit 51, a high-speed digital signal coding unit 52, a parallel/serial converting unit 53, an E/O 54, a downlink signal controlling unit 55, an uplink signal controlling unit 56, a central processing unit (CPU) 58, and a serial communication controller (SCC) controller 59. Incidentally, the E/Os 31, 35 and 54 as well as the O/Es 36, 40 and 45 are options which are required only in a case where interfaces between the panels are optical signals. If the interfaces are electric signals, the E/Os 31, 35 and 54 as well as the O/Es 36, 40 and 45 are unnecessary.

The panels may be mounted not only in the same shelf but also in shelves remote from each other. Optical signals can realize a remote interface using high-speed digital signals.

The channel coding processing unit 21 performs a channel coding process to signals which the BB panel including the channel coding processing unit 21 is going to transmit, and sends the resultant signals to the channelization coding unit 22. In a case where the function of the channel coding processing is outside the BB panel, the BB panel may include a receiver for receiving signal from the outside in place of the channelization coding processing unit 22. ,

The channelization coding processing unit 22 performs a coding process to the signals from the channel coding processing unit 21 by use of channelization codes which are different from one channel to another. During the coding process, the channelization coding processing unit 22 uses frame timings generated by the frame timing generator 25.

The scramble coding processor 23 performs a coding process to the signals from the channelization coding processing unit 22 by use of scrambling codes which are different from one cell to another. During the coding process, the scramble coding processing unit 23 uses the frame timings generated by the frame timing generator 25. Digital signals to which the scramble coding process is applied are multiplexed for each transmission antenna unit, and are given to the MUX unit 24.

The MUX unit 24 multiplexes together signals from the scramble coding processing unit 23 (communication signals), inter-CPU communication signals from the CPU 58 via the SCC controller 59, frame timing signals generated by the frame timing generator 25, and the frame number generated by the frame number generating unit 26. The inter-CPU communications are made between the CPU of the BB panel and the CPU of each of a plurality of RF panels, or between the CPU of the BB panel and the CPU of the other BB panel. For this reason, there are a plurality of SCC controllers 59, and there are a plurality of inter-CPU communication signal. During the multiplexing, the frame numbers and the inter-CPU communication signals are inserted thereto periodically while the frame timing signals are being used as a reference. Special codes for high-speed digital communications may be used as the frame timing signals. For example, 8B/10B coding may be adopted as a coding method for high-speed digital communications, and comma codes may be used as the frame timing. In addition, a plurality of comma codes indicating the respective timings different from one another, such as signal for frame timing recognition and CHIP timing recognition, may be used

The digital signals multiplexed for each transmission antenna unit, which are from the MUX unit 24, are given to the downlink signal controlling unit 55.

The downlink signal controlling unit 55 receives the signal from the inner-circuit (the inner-circuit is in the BB panel and may transmits and receives signals with the channel coding processing unit 21 and the uplink signal controlling unit 56) and receives the signal from the other BB panel through the BB panel interface 18. In accordance with an instruction from the CPU 58, the downlink signal controlling unit 55 selects, multiplexes, and distributes, the signals inputted for each transmission antenna unit, and transmits the resultant signals to a predetermined destination of transmission. The destination of the transmission is any one of the plurality of RF panels connected to the RF panel interface 16, or the other BB panel connected to the BB panel interface 17. At that time, in a case where the downlink signal controlling unit 55 is going to send the signals to any one of the RF panels connected to the RF panel interface 16, the downlink signal controlling unit 55 sends the signal to the format converting unit 32. In a case where the downlink signal controlling unit 55 is going to send the signals to the other BB panel connected to the BB panel interface 17, the downlink signal controlling unit 55 sends the signal to the format converting unit 27.

The format converting unit 27 converts the format of the signals, which is going to be transmitted to the BB panel connected to the BB panel interface 17, to an inter-BB panel interface format, and sends the resultant signals to the MUX unit 28. The format converting unit 27 may handle the format of the signal such as Common Public Radio Interface (CPRI), Open Base Station Architecture Initiative (OBSAI), RadioIO and Ether frame.

The MUX unit 28 multiplexes together the signals from the format converting unit 27, and the signals of the inter-CPU communications between the BB panel and the other BB panel, which signals come from the CPU 58 via the SCC controller 59.

The high-speed digital signal coding unit 29 performs a coding process for high-speed digital signals to the signals from the MUX unit 28. The coding process for high-speed digital signals is, for example, 8B/10B encoding.

The parallel/serial converting unit 30 converts the parallel signals coming from the high-speed digital signal coding unit 29 to serial signals. The serial signals are transmitted, in the form of high-speed differential digital signals, as digital signals multiplexed for each transmission antenna unit for downlink transmission to the other BB panel connected to the BB panel interface 17. Otherwise, in a case where the optional E/O 31 exists, the serial signals are converted to optical signals by the E/O 31, and are transmitted to the other BB panel.

In addition, in a case where the other BB panel is connected to the BB panel interface 18, digital signals multiplexed for each transmission antenna unit are similarly generated in the other BB panel, and are sent in, as high-speed differential digital signals, to this BB panel. In a case where the optional O/E 45 exist, the O/E 45 converts the optical signals coming from the other BB panel to electric signals.

The serial/parallel converting unit 46 converts the high-speed differential digital signals from the other BB panel to parallel signals.

The high-speed digital signal decoding unit 47 may perform an 8B/10B decoding process to the signals from the serial/parallel converting unit 46.

The DEMUX unit 49 separates inter-BB panel CPU communication signals from signals coming from the high-speed digital signal decoding unit 47, and sends the inter-BB panel CPU communication signals to the CPU 58 via the SCC controller 59. After timing adjustment, the DEMUX unit 49 also sends the resultant signals to the inverse format converting unit 48.

The inverse format converting unit 48 performs an inverse format conversion to the inter-BB panel interface with regard to the signals from the DEMUX unit 49, and sends the resultant signals to the downlink signal controlling unit 55. The inverse format converting unit 48 may handle the format of the signal such as Common Public Radio Interface (CPRI), Open Base Station Architecture Initiative (OBSAI), RadioIO and Ether frame.

The signals which are going to be sent to the RF panels connected to the RF panel interface 16 are sent from the downlink signal controlling unit 55 to the format converting unit 32.

The format converting unit 32 converts the digital signals multiplexed for each transmission antenna unit, which come from the downlink signal controlling unit 55, to signals formatted for inter-RF panel interface. The format converting unit 32 may handle the format of the signal such as Common Public Radio Interface (CPRI), Open Base Station Architecture Initiative (OBSAI), RadioIO and Ether frame.

The high-speed digital signal coding unit 33 may perform an 8B/10B encoding process to the signals from the format converting unit 32.

The parallel/serial converting unit 34 converts the parallel signals coming from the high-speed digital signal coding unit 33 to serial signals. The serial signals are transmitted to the RF panels, as digital signals multiplexed for each transmission antenna unit for downlink transmission to the RF panels connected to the RF panel interface 16, in the form of high-speed differential digital signals. Otherwise, in a case where the optional E/O 35 exists, the serial signals are converted to optical signals by the E/O 35, and the resultant signals are transmitted to the RF panels.

In addition, high-speed differential digital signals are sent into this BB panel from the RF panels connected to the RF panel interface 16. In a case where the optional O/E 36 exists, the O/E 36 converts the optical signals coming from the RF panels to electric signals.

The serial/parallel converting unit 37 converts the high-speed differential digital signals coming from the RF panels to parallel signals.

The high-speed digital signal decoding unit 38 performs a decoding process (for example, 8B/10B) to the signals from the serial/parallel converting unit 37.

The DEMUX unit 39 separates inter-BB panel CPU communication signals from the signals coming from the high-speed digital signal decoding unit 38, and sends the inter-BB panel CPU communication signals to the CPU 58 via the SCC controller 59. In addition, the DEMUX unit 39 sends uplink signals, which have been demodulated by the RF panels, to the uplink signal controlling unit 56.

Furthermore, in a case where the other BB panel is connected to the BB panel interface 17, high-speed differential digital signals are received from the other BB panel. In a case where the optional O/E 40 exists, the O/E 40 converts the optical signals coming from the other BB panel to electric signals.

The serial/parallel converting unit 41 converts the high-speed differential digital signals coming from the other BB panel to parallel signals.

The high-speed digital signal decoding unit 42 performs a decoding process (for example, 8B/10B) to the signals from the serial/parallel converting unit 43.

The DEMUX unit 43 separates inter-BB panel CPU communication signals from the signals coming from the high-speed digital signal decoding unit 42. Thereafter, the DEMUX unit 43 adjusts the timing of the inter-BB panel CPU communication signals, and sends the resultant signals to the inverse format converting unit 44.

The inverse format converting unit 44 performs an inverse format conversion to the inter-BB panel interface with regard to the signals from the DEMUX unit 43, and sends the resultant signals to the uplink signal controlling unit 56. The inverse format converting unit 44 may handle the format of the signal such as Common Public Radio Interface (CPRI), Open Base Station Architecture Initiative (OBSAI), RadioIO and Ether frame.

The uplink signal controlling unit 56 receives the uplink signals from the RF panels connected to the RF panel interface 16 or the uplink signals from the other BB panel connected to the BB panel interface 17. In accordance with an instruction from the CPU 58, the uplink signal controlling unit 56 selects and distributes the signals, thus transmitting the resultant signals to a predetermined destination of transmission. The destination of the transmission is the other BB panel connected to the BB panel interface 18, or the BB itself. At that time, in a case where the uplink signal controlling unit 56 is going to send the signals to the other BB panel connected to the BB panel interface 18, the uplink signal controlling unit 56 sends the signals to the format converting unit 50, and thus fetches the signals for the BB itself into the unit (channel coding processing unit 21).

The format converting unit 50 converts the format of the signals, which are going to be transmitted to the BB panel connected to the BB panel interface 18, to an inter-BB panel interface, and sends the resultant signals to the MUX unit 51. The format converting unit 50 may handle the format of the signal such as Common Public Radio Interface (CPRI), Open Base Station Architecture Initiative (OBSAI), RadioIO and Ether frame.

The MUX unit 51 multiplexes together the signals from the format converting unit 50 (communication signals) and the signals of the inter-CPU communications between the BB panel and the other BB panel which signals come from the CPU 58 via the SCC controller 59.

The high-speed digital signal decoding unit 52 performs a coding process (for example, 8B/10B) for high-speed digital signals to the signals from the MUX unit 51.

The parallel/serial converting unit 53 converts the parallel signals coming from the high-speed digital signal coding unit 52 to serial signals. The serial signals are transmitted, in the form of high-speed differential digital signals, to the other BB panel connected to the BB panel interface 18. Otherwise, in a case where the optional E/O 54 exists, the serial signals are converted to optical signals by the E/O 54, and are transmitted to the other BB panel.

The CPU 58 is a control unit for performing intra-panel control and inter-panel control. The CPU 58 controls each unit inside the panel, and additionally performs inter-CPU communications with the other panel via the SCC controller 59.

The SCC controller 59 is a SCC, and realizes inter-CPU serial communications.

The frame timing generating unit 25 generates frame timings for the BB itself.

The frame number generating unit 26 generates frame numbers of frames which the BB panel itself transmits.

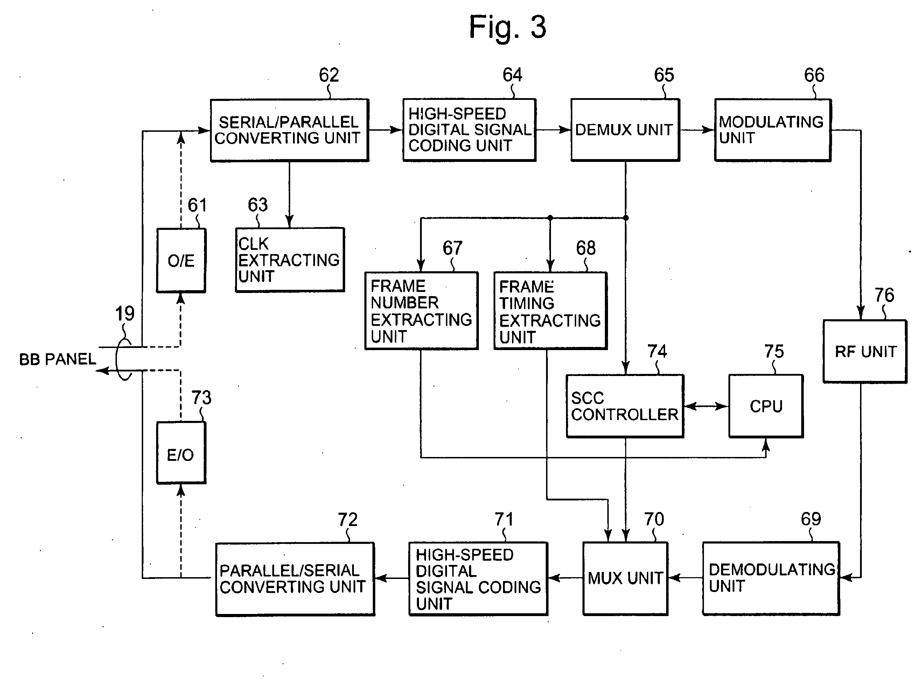

Fig. 3 is a block diagram showing a configuration of each of the RF panels according to this exemplary embodiment. As shown in Fig. 3, each of the RF panels includes an O/E 61, a serial/parallel converting unit 62, a clock (CLK) extracting unit 63, a high-speed digital signal decoding unit 64, a DEMUX unit 65, a modulating unit 66, a frame number extracting unit 67, a frame timing extracting unit 68, a demodulating unit 69, a MUX unit 70, a high-speed digital signal coding unit 71, a parallel/serial converting unit 72, an E/O 73, a SCC controller 74, a CPU 75 and a RF unit 76.

Downlink high-speed differential digital signals are sent into this RF panel from the BB panel connected to the BB panel interface 19. In a case where the optional O/E 61 exists, the O/E 61 converts the optical signals coming from the BB panel to electric signals.

The serial/parallel converting unit 62 is, for example, a SerDes (Serialize Deserialize), and converts the high-speed differential digital signals coming for the BB panel to parallel signals.

The CLK extracting unit 63 extracts reception clocks from the signals of the serial/parallel converting unit 62.

The high-speed digital signal decoding unit 64 decodes the signals coming from the serial/parallel converting unit 62.

The DEMUX unit 65 separates CPU communication signals from signals coming from the high-speed digital signal decoding unit 64, and sends the CPU communication signals to the CPU 75 via the SCC controller 74. As well, the DEMUX unit 65 sends, to the modulating unit 66, signals multiplexed for each transmission antenna unit.

The frame number extracting unit 67 extracts frame numbers from the signals of the DEMUX unit 65, and sends the frame numbers to the CPU 75.

The frame timing extracting unit 68 extracts frame timings from the signals of the DEMUX unit 65, and sends the frame timings to the MUX 70. In the MUX 70, the frame timings are used as frame timings for uplink signals.

The modulating unit 66 modulates the signals multiplexed for each antenna unit, which come from the DEMUX unit 65, and sends the resultant signals to the RF unit 76.

Uplink signals to the BB panel connected to the BB panel interface 19 are given from the RF unit 76 to the demodulating unit 69.

The demodulating unit 69 demodulates the signals coming from the RF unit 76.

The MUX unit 70 multiplexes together the signals from the demodulating unit 69 and inter-CPU communication signals which have been received from the CPU 75 via the SCC controller 74, followed by a format conversion. During the conversion, while using frame timings which have been extracted by the frame timing extracting unit 68, the MUX 70 inserts the frame timing signals into the multiplexed signals. In this respect, special codes may be also used for the frame timings.

The high-speed digital signal coding unit 71 performs a coding process for high-speed digital signals to the signals coming from the MUX unit 70. The coding process for high-speed digital signals is, for example, an 8B/10B encoding.

The parallel/serial converting unit 72 is, for example, a SerDes. The parallel/serial converting unit 72 converts the parallel signals coming from the high-speed digital signal coding unit 71 to serial signals. The serial signals are transmitted, in the form of high-speed differential digital signals, as uplink multiplexed digital signals to the BB panel connected to the BB panel interface 19. Otherwise, in a case where the optional E/O 73 exists, the signals are converted to optical signals by the E/O 73, and the resultant signals are transmitted to the BB panel.

The SCC controller 74 realizes inter-CPU serial communications.

The CPU 75 is a controlling unit for performing intra-panel control and inter-panel control. The CPU 75 controls each unit inside the panel, and additionally performs inter-CPU communications with the other panel via the SCC controller 74.

The RF unit 76 process, for example amplifies, RF signals which have been received, or which are going to be transmitted.

As described above, the base station equipment according to an aspect of the present invention has the configuration where the BB panels for performing the baseband signal processing are separated from the RF panels for performing the RF signal process. In the configuration, the BB panels are designed to be capable of being connected with each other. As well, any one of the BB panels is designed to be capable of multiplexing together signals of the BB itself and signals of the other BB panel, and of accordingly relaying the resultant signals. For this reason, connection of a BB panel to an existing BB panel makes it possible to additionally provide the BB panel to the base station equipment without additional cables between the BB panel and the RF panels.

In addition, the following configuration has been illustrated for this exemplary embodiment. The configuration includes the two BB panels exists. One BB panel 11 is connected to the RF panels 13 to 15, and the other BB panel 12 is connected to the BB panel 11. However, the present invention is not limited to this configuration. It suffices that at least one of the BB panels is connected with the RF panels via the RF panel interface 16, and another BB panel is connected with the other of the BB panels via the BB panel interface 17. For example, another BB panel can be additionally connected to the BB panel interface 18 of the BB panel 12 connected to the BB panel 11.

The BB panel multiplexes the signal on which the BB panel itself performs a baseband signal process, and signals of inter-CPU communications between the CPU of its own and the CPU of each of the RF panels, or between the CPU of its own and the CPU of the other BB panel. On the other hand, the BB panel demultiplexes signals to the signal, on which the BB panel itself performs a baseband signal process, and signals of inter-CPU communications between the CPU of its own and the CPU of each of the RF panels, or between the CPU of its own and the CPU of the other BB panel. For this reason, inter-CPU communications among the panels are made possible in the configuration in which a BB panel can be additionally provided to the base station equipment without additional cables between the additional-provided BB panel and each of the RF panels.

Furthermore, in this exemplary embodiment, as an alternative configuration, inter-panel signals can be transmitted by use of optical signals as well. For this reason, high-speed interfaces between the remote panels are made possible.

Moreover, in this exemplary embodiment, since the 8B/10B code is used for the inter-panel signals, high-speed interfaces are made possible. Since the comma codes are used as the frame timing signals, the frame timing signals can be identified by means of assigning different codes and different timings.

It should be noted that, although the configuration including the three RF panels has been shown with regard to this exemplary embodiment, the present invention is not limited to this configuration. Only one RF panel may be included in the configuration, or that four or more RF panels may be included in the configuration.

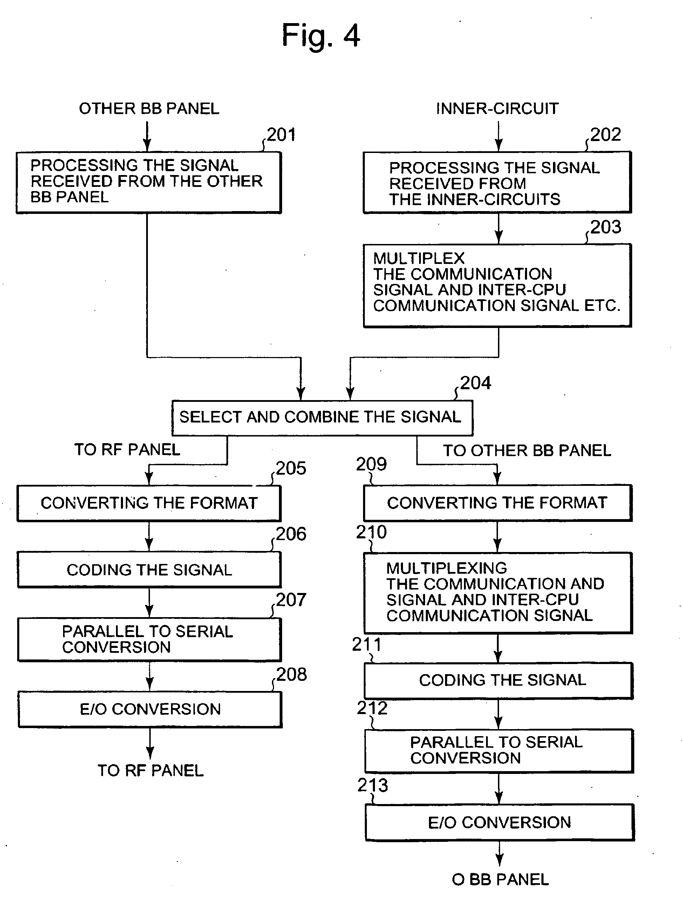

Fig. 4 is a downlink signal processing flow of the BB panel according to the first exemplary embodiment.

The BB panel receives the signal from the other BB panel through the interface 18. The received signal is processed through O/E 45 to the high-speed digital signal decoding unit 49 (Operation 201).

On the other hand, the signal processing is explained along with the configuration of Fig. 2. From the inner-circuits of the BB panel, the signal comes to the channel coding processing unit 21. The BB panel processes the signal by using the circuits from the channel coding processing unit 21 to the scramble coding processing unit 23 (Operation 202).

After the Operation 202, the BB panel multiplexes together signals from the scramble coding processing unit 23, inter-CPU communication signals from the CPU 58 via the SCC controller 59, and frame timing signals from the frame timing generator 25 (Operation 203).

The signal to be sent to the BB panel connected to the interface 17 among the signal from the inner-circuits of the BB panel is combined with the signal to be sent to the BB panel connected to the interface 17 among the signal from the other BB panel connected to the interface 18. In the meantime, the signal to be sent to the RF panel connected to the interface 16 among the signal from the inner-circuits of the BB panel is combined with the signal to be sent to the RF panel connected to the interface 16 among the signal from the BB panel connected to the interface 18 (Operation 204). This operation is mainly performed at the downlink signal controlling unit 55.

After operation 204, the BB panel converts the format of the combined signal to be sent to the RF panel through the interface 16 into the other format at the format converting unit 32 (Operation 205). Then, the BB panel codes the converted signal by using, for example, the 8B/10B coding processing method at the high-speed digital signal coding unit 33 (Operation 206).

At operation 207, the BB panel converts the parallel format of the coded signal to the serial format at the parallel/serial converting unit 34 (Operation 207). Then, the BB panel transmits the serial signal to the RF panel through the interface 16 at the E/O 35 (Operation 208).

On the other hand, after operation 204, the BB panel converts the format of the signal to be sent to the other BB panel through the interface 17 into other format at the format converting unit 27 (Operation 209).

Then, the BB panel multiplexes together the signals from the format converting unit 27, and the signals of the inter-CPU communications between the BB panel and the other BB panel, which signals come from the CPU 58 via the SCC controller 59 (Operation 210).

Then, the BB panel codes the converted signal by using, for example, the 8B/10B coding method at the high-speed digital signal coding unit 29 (Operation 211).

At operation 212, the BB panel converts the parallel format of the coded signal to the serial format the parallel/serial converting unit 30 (Operation 210). Then, the BB panel transmits the signal to the BB panel through the interface 17 at the E/O 35 (Operation 213).

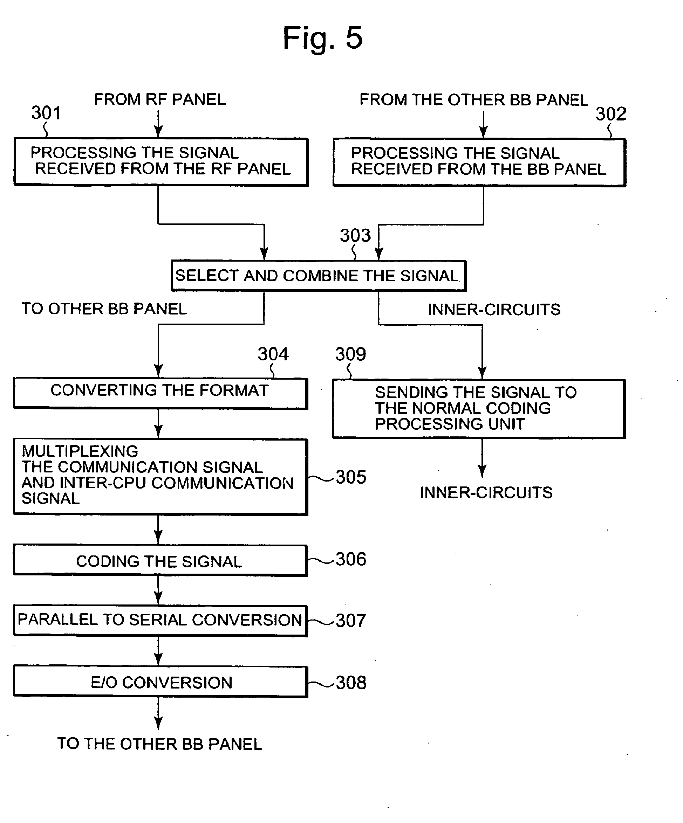

Fig. 5 is a uplink signal processing flow of the BB panel according to the first exemplary embodiment.

The BB panel receives the signal from the other BB panel through the interface 17. The received signal is processed through O/E 40 to the high-speed digital signal decoding unit 44 (Operation 301).

On the other hand, the BB panel receives the signal from the RF panel through the interface 16. The received signal is processed through O/E 36 to DEMUX unit 39 (Operation 302).

The signal to be sent to the BB panel connected to the interface 18 among the signal received from other BB panel through the interface 17 is combined with the signal to be sent to the BB panel connected to the interface 18 among the signal received from the RF panel through the interface 16. In the meantime, the signal to be sent to the inner-circuit of the BB panel among the signal from the RF panel is combined with the signal to be sent to the inner-circuit among the signal from the BB panel connected to the interface 17 (Operation 303). This operation is mainly performed at the downlink signal controlling unit 56.

After operation 303, the BB panel converts the format of the combined signal to be sent to the BB panel through the interface 18 into the other format at the format converting unit 50 (Operation 304).

Then, the BB panel multiplexes together the signals from the format converting unit 50 and the signals of the inter-CPU communications between the BB panel and the other BB panel which signals come from the CPU 58 via the SCC controller 59 at the MUX unit 51 (Operation 305).

Then, the BB panel codes the converted signal by using, for example, the 8B/10B coding processing method at the high-speed digital signal coding unit 52 (Operation 306).

At operation 306, the BB panel converts the parallel format of the coded signal to the serial format at the parallel/serial converting unit 53 (Operation 307). Then, the BB panel transmits the serial signal to the BB panel through the interface 18 at the E/O 54 (Operation 308).

On the other hand, after operation 303, the BB panel sends the signal to be processed in the BB panel to the inner-circuit (Operation 309).
a second exemplary embodiment of the present invention is provided below.

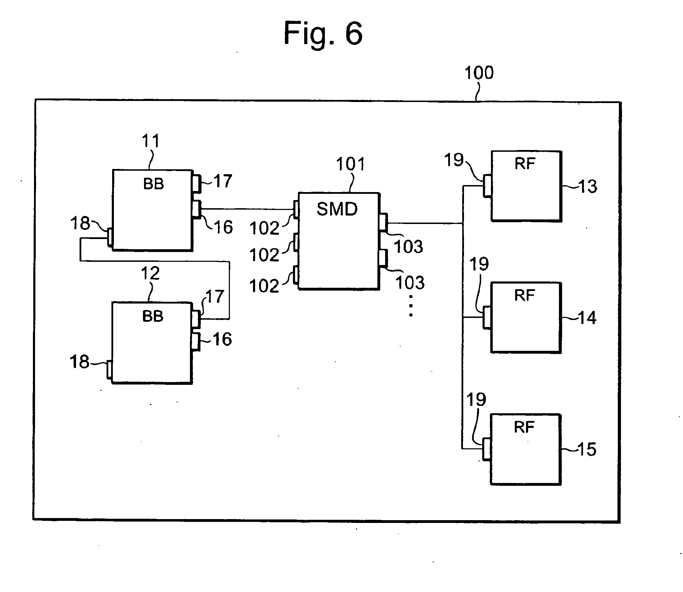

Fig. 6 is a block diagram showing a configuration of W-CDMA base station equipment according to a second exemplary embodiment of the present invention. The base station equipment 100 according to the second exemplary embodiment is different from the base station equipment 10 according to the first exemplary embodiment in that a selection/multiplex/demultiplex (SMD) panel 101 is provided between the BB panel 11 and the FR panels 13 to 15. As shown in Fig. 6, the base station equipment 100 includes the SMD panel 101 in addition to the BB panels 11 to 12 and the RF panels 13 to 15. The SMD panel 101 includes a plurality of BB panel interfaces 102 and a plurality of RF panel interfaces 103. A BB panel, or a group of BB panels, which constitutes redundancy, is connected to one of the plurality of BB panel interfaces 102. Moreover, it does not matter that the plurality of RF panel interfaces 103 exist. In this case, a PF panel constituting redundancy is connected to each of the plurality of RF panel interfaces 103.

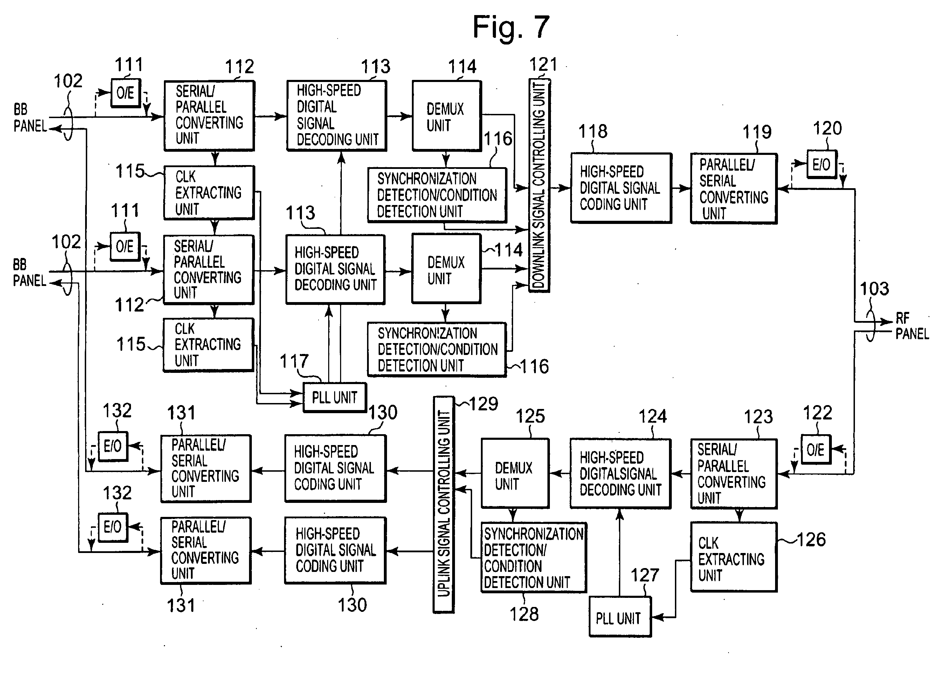

Fig. 7 is a block diagram showing a configuration of the SMD panel in the second exemplary embodiment. As shown in Fig. 7, the SMD panel 101 includes O/Es 111, serial/parallel converting units 112, high-speed digital signal decoding units 113, DEMUXs 114, CLK extracting units 115, synchronization detection/condition detection units 116, a PLL unit 117, a high-speed digital signal coding unit 118, a parallel/serial converting unit 119, an E/O unit 120, a downlink signal controlling unit 121, an O/E 122, a serial/parallel converting unit 123, a high-speed digital signal decoding unit 124, a DEMUX 125, a CLK extracting unit 126, a PLL unit 127, a synchronization detection/condition detection unit 128, an uplink signal controlling unit 129, high-speed digital signal coding units 130, parallel/serial converting units 131 and E/Os 132.

BB panels are connected to the BB panel interface 102, and digital signals multiplexed for each transmission antenna unit are sent in from the BB panels. In a case where the optional E/O 111 exists, the O/E 111 converts the optical signals coming from the BB panels to the electric signals.

The serial/parallel converting unit 112 converts the high-speed differential digital signals coming from the BB panels to parallel signals.

The CLK extracting unit 115 extracts clocks from the signals of the serial/parallel converting unit 112, and sends the clocks to the PLL unit 117. The PLL unit 117 generates reference clocks by use of the extracted CLK which have been extracted by each of the CLK extracting units 115.

The high-speed digital signal decoding unit 113 performs, for example, a respective 8B/10B decoding process to the signals of the serial/parallel converting unit 112. During the process, the high-speed digital signal decoding unit 113 uses the reference clocks from the PLL unit 117.

The DEMUX unit 114 separates frame timing signals and BB-panel condition signals from the signals of the high-speed digital signal decoding unit 113, and sends the frame timing signals and BB-panel condition signals to the synchronization detection/condition detection unit 116. In addition, the DEMUX unit 114 sends, to the downlink signal controlling unit 121, signals resulting from separating out the frame timing signals and BB-panel condition signals from the signals of the high-speed digital signal decoding unit 113.

The synchronization detection/condition detection unit 116 monitors conditions respectively of the BB panels by means of the signals from the DEMUX unit 114. On the basis of the condition information thus obtained, the synchronization detection/condition detection unit 116 generates condition signals for controlling redundancy configuration, selecting, multiplexing of, and distributing of the downlink signals in the redundancy configuration.

The downlink signal controlling unit 121 controls the selecting of, the multiplexing of, and the distributing of, the downlink digital signals multiplexed for each antenna unit on the basis of the condition signals from the synchronization detection/condition detection unit 116. For example, if a trouble occurs in any one of the BB panels constituting the redundancy, a switching is made in order that signals which have been transmitted and received via the BB panel can be transmitted and received via another BB panel.

The high-speed digital signal coding unit 118 performs, for example, an 8B/10B encoding process to the signals from the downlink signal controlling unit 121.

The parallel/serial converting unit 119 converts the parallel signals, which come from the high-speed digital signal coding unit 118, to serial signals. The serial signals are transmitted, in the form of high-speed differential digital signals, as digital signals multiplexed for each transmission antenna unit for downlink transmission to the RF panels connected to the RF panel interface 103. Otherwise, in a case where the optional E/O 120 exists, the serial signals are converted to optical signals by the E/O 120, and the optical signals are transmitted to the RF panels.

In addition, high-speed differential digital signals are sent into the SMD panel from the RF panels connected to the RF panel interface 103. In a case where the optional O/E 122 exists, the O/E 122 converts the optical signals coming form the RF panels to electric signals.

The serial/parallel converting unit 123 converts the high-speed differential digital signals coming from the RF panels to parallel signals.

The CLK extracting unit 126 extracts clocks from the signals of the serial/parallel converting unit 123, and sends the clocks to the PLL unit 127. The PLL unit 127 generates recovery clocks by use of the extracted CLKs which have been extracted by the CLK extracting unit 126. The recovery clocks generated by the PLL unit 127 are used, as reference clocks for the units following the high-speed digital signal decoding unit 12.

The high-speed digital signal decoding unit 124 performs a decoding process (for example, 8B/10B) to the signals from the serial/parallel converting unit 123.

The DEMUX unit 125 separates frame timing signals and condition signals of each of the RF panels from the signals coming from the high-speed digital signals decoding unit 124. Then, the DEMUX unit 125 sends, to the synchronization detection/condition detection unit 128, the frame timing signals and condition signals of each of the RF panels. In addition, the DEMUX 125 sends, to the uplink signal controlling unit 129, signals resulting from separating out the frame timing signals and condition signals of each of the RF panels from the signals coming from the high-speed digital signals decoding unit 124.

The synchronization detection/condition detection unit 128 monitors the conditions respectively of the RF panels by means of the signals from the DEMUX unit 125. On the basis of the condition information thus obtained, the synchronization detection/condition detection unit 128 generates condition signals for controlling redundancy configuration of selection of, and distribution of, the uplink signals.

The uplink signal controlling unit 129 controls selection of, and distribution of, the uplink multiplexed digital signals on the basis of the condition signals from the synchronization detection/condition detection unit 128. For example, if a trouble occurs in any one of the RF panels constituting the redundancy, a switching is made in order that signals which have been transmitted and received by the BB panel can be transmitted and received by another BB panel.

The high-speed digital signal coding unit 130 performs, for example, an 8B/10B encoding process to the signals from the uplink signal controlling unit 129. At this time, the uplink signal controlling unit 129 can multi-cast the same signals to the plurality of BB panels.

The parallel/serial converting unit 131 converts the parallel signals, which come from the high-speed digital signal coding unit 130, to serial signals. The serial signals are transmitted, in the form of high-speed differential digital signals, as multiplexed digital signals for uplink transmission, to the BB panels connected to the BB panel interface 102. Otherwise, in a case where the optional E/O 132 exists, the serial signals are converted to optical signals by the E/O 132, and the optical signals are transmitted to the BB panels.

As described above, the base station equipment according to an aspect of the present invention includes the SMD panel between the group of the plurality of BB panels constituting the redundancy and the group of the plurality of RF panels constituting the redundancy. The SMD panel monitors the conditions respectively of the BB panels and the RF panels, and controls the redundancy configuration of the BB panels and the redundancy configuration of the RF panels on the basis of the condition information. For this reason, the redundancies can be easily realized without providing special functions to the BB panels or the RF panels.

## Claims

1. A baseband signal processing module (11) comprising:
a first interface (16) which is configured to be connected to a radio frequency signal processing module (13, 14, 15) which is adaptated to perform a radio frequency signal process;
a second interface (17) and a third interface (18) which are configured to be connected to different baseband signal processing modules (12), and
a control module which is adapted to transmit signals that have been processed with a baseband signal process performed by the control module to, and to receive signals which are processed with the baseband signal process performed by the control module from, at least one of the radio frequency signal processing modules (13, 14, 15) via the first interface (16) and one of said different baseband signal processing modules (12) via the second interface (17), and which is adapted to relay, via the third interface (18), signals, out of signals transmitted and received via the first interface (16) or the second interface (17) which are to be processed with the baseband signal process performed by another of said different baseband signal processing modules (12);
said control module comprising:
means (55, 56) for combining a signal received from said one different baseband signal processing module (12) and either a signal received from inner circuits of the baseband processing module (11) or a signal received from said at least one radio frequency signal processing module (13, 14, 15);
means (27, 50) for converting a format of said combined signal to provide a converted signal;
means (28, 51) for multiplexing said converted signal together with a control signal; and means for transmitting said multiplexed signal.

2. The baseband signal processing module (11) according to claim 1,
wherein the control module further comprises:
a CPU (58) which is adapted to transmit said control signal and to receive a control signal, the control signals being for inter-CPU communication with at least one other CPU of said radio frequency signal processing module (13, 14, 15) and said different baseband signal processing modules (12) respectively, through at least one of said first interface (16), said second interface (17) and the third interface (18).

3. The baseband signal processing module (11) according to claim 2,
wherein said control signals are multiplexed with said signals which are processed with the baseband signal process and transmitted and received through at least one of said first interface (16), said second interface (17) and said third interface (18).

4. The baseband signal processing module (11) according to claim 1, 2, or 3
wherein the control module multiplex is adapted to predetermined codes as frame timing signals together with the signals which are processed with the baseband signal process.

5. The baseband signal processing module (11) according to claim 4,
wherein the predetermined codes are comma codes.

6. The module (11) according to any one of claims 1 to 5,
wherein the baseband signal process performed by the control module includes 8B/10B coding.

7. The module (11) according to any one of claims 1 to 6,
wherein the baseband signal processing module (11) is provided as a baseband panel which is mounted in a shelf.

8. A baseband equipment (10) comprising:
a radio frequency signal processing module (13, 14, 15) which is adapted to perform a radio frequency signal process; and
a baseband signal processing module (11) according to claim 1 in communication with said radio frequency signal processing module.

9. The baseband equipment (10) according to claim 8, further comprising a selection/multiplex/demultiplex module (101) which is separately provided between the baseband signal processing module (11) and the radio frequency signal processing module (13, 14, 15), said selection/multiplex/demultiplex module (101) being connected to both of said baseband signal processing module (11) and the radio frequency signal processing module (13, 14, 15) said selection/multiplex/demultiplex module (101) being adapted to control selection of, multiplex of, and demultiplex of, signals between the baseband signal processing module (11) and the radio frequency processing module (13, 14, 15).

10. The baseband equipment (10) according to claim 8 or 9, wherein the control module further comprises:
a CPU (58) which is adapted to transmit said control signal and to receive a control signal, the control signals being for inter-CPU communication with at least one other CPU of said radio frequency signal processing module (13, 14, 15) and said different baseband processing modules (12), respectively, through at least one of said first interface (16), said second interface (17) and said third interface (18).

11. The baseband equipment (10) according to claim 10, wherein said control signals are multiplexed with said signals which are processed with the baseband signal process and transmitted and received through at least one of said first interface (16), said second interface (17) and said third interface (18).

12. The baseband equipment (10) according to claim 8, 9, 10 or 11, wherein the control module is adapted to multiplex predetermined codes as frame timing signals together with the signals which are processed with the baseband signal process.

13. The baseband equipment (10) according to claim 12, wherein the predetermined codes are comma codes.

14. The baseband equipment (10) according to any one of claims 8 to 13, wherein the baseband signal process performed by the control module includes 8B/10B coding.

15. The baseband equipment (10) according to any one of claims 8 to 14, wherein the baseband signal processing module (11) is provided as a baseband panel which is mounted in a shelf.

16. A downlink signal processing method of a baseband signal processing module (11), the method comprising:
receiving, at the baseband signal processing module (11), a first signal from a first external baseband signal processing module;
receiving, at the baseband signal processing module (11), a second signal from inner-circuits of the baseband signal processing module (11),
selecting and combining (204) the first signal received from the first external baseband signal processing module and said second signal received from the inner-circuits of the baseband signal processing module (11);
converting a format (209) of said combined signal to provide a converted signal;
multiplexing (210) said converted signal together with a control signal; and
transmitting said multiplexed signal.

17. A uplink signal processing method of a baseband signal processing module (11), the method comprising:
receiving, at the baseband signal processing module (11), a first signal from an external baseband signal processing module;
receiving, at the baseband signal processing module (11), a second signal from a radio frequency signal processing module (13, 14, 15);
selecting and combining (303) the first signal received from said external baseband signal processing module and the second signal received from said radio frequency signal processing module (13, 14, 15);
converting a format (304) of said combined signal to provide a converted signal;
multiplexing (305) said converted signal together with a control signal; and transmitting said multiplexed signal.

18. The method according to claim 16 or 17,
wherein the baseband signal processing module (11) is provided as a baseband panel which is mounted in a shelf.

## Patentansprüche

1. Basisbandsignalverarbeitungsmodul (11), mit:
einer ersten Schnittstelle (16), die dafür konfiguriert ist, mit einem Hochfrequenzsignalverarbeitungsmodul (13, 14, 15) verbunden zu werden, das dazu geeignet ist, eine Hochfrequenzsignalverarbeitung auszuführen;
einer zweiten Schnittstelle (17) und einer dritten Schnittstelle (18), die dafür konfiguriert sind, mit verschiedenen Basisbandsignalverarbeitungsmodulen (12) verbunden zu werden; und
einem Steuermodul, das dazu geeignet ist, Signale, die durch eine durch das Steuermodul ausgeführte Basisbandsignalverarbeitung verarbeitet worden sind, über die erste Schnittstelle (16) zu mindestens einem der Hochfrequenzsignalverarbeitungsmodule (13, 14, 15) und über die zweite Schnittstelle (17) zu einem der verschiedenen Basisbandsignalverarbeitungsmodule (12) zu übertragen, und Signale, die durch die durch das Steuermodul ausgeführte Basisbandsignalverarbeitung verarbeitet werden sollen, über die erste Schnittstelle (16) von mindestens einem der Hochfrequenzsignalverarbeitungsmodule (13, 14, 15) und über die zweite Schnittstelle (17) von einem der verschiedenen Basisbandsignalverarbeitungsmodule (12) zu empfangen, und dazu geeignet ist, Signale unter den über die erste Schnittstelle (16) oder die zweite Schnittstelle (17) übertragenen und empfangenen Signalen über die dritte Schnittstelle (18) weiterzuleiten, die durch die Basisbandsignalverarbeitung verarbeitet werden sollen, die durch ein anderes der verschiedenen Basisbandsignalverarbeitungsmodule (12) ausgeführt wird;
wobei das Steuermodul aufweist:
eine Einrichtung (55, 56) zum Kombinieren eines von dem einen der verschiedenen Basisbandsignalverarbeitungsmodule (12) empfangenen Signals mit einem von inneren Schaltungen des Basisbandsignalverarbeitungsmoduls (11) empfangenen Signal oder einem von dem mindestens einen Hochfrequenzsignalverarbeitungsmodul (13, 14, 15) empfangenen Signal;
eine Einrichtung (27, 50) zum Umwandeln eines Formats des kombinierten Signals zum Bereitstellen eines umgewandelten Signals;
eine Einrichtung (28, 51) zum Multiplexen des umgewandelten Signals zusammen mit einem Steuersignal; und
eine Einrichtung zum Übertragen des gemultiplexten Signals.

2. Basisbandsignalverarbeitungsmodul (11) nach Anspruch 1, wobei das Steuermodul ferner aufweist:
eine CPU (58), die dazu geeignet ist, das Steuersignal zu übertragen und ein Steuersignal zu empfangen, wobei die Steuersignale für eine Inter-CPU-Kommunikation mit mindestens einer anderen CPU des Hochfrequenzsignalverarbeitungsmoduls (13, 14, 15) bzw. der verschiedenen Basisbandsignalverarbeitungsmodule (12) über mindestens eine Schnittstelle unter der ersten Schnittstelle (16), der zweiten Schnittstelle (17) und der dritten Schnittstelle (18) dienen.

3. Basisbandsignalverarbeitungsmodul (11) nach Anspruch 2, wobei die Steuersignale mit den Signalen gemultiplext werden, die durch die Basisbandsignalverarbeitung verarbeitet werden und über mindestens eine Schnittstelle unter der ersten Schnittstelle (16), der zweiten Schnittstelle (17) und der dritten Schnittstelle (18) übertragen und empfangen werden.

4. Basisbandsignalverarbeitungsmodul (11) nach Anspruch 1, 2 oder 3, wobei das Steuermodul dazu geeignet ist, vorgegebene Codes als Rahmentaktsignale zusammen mit den Signalen zu multiplexen, die durch die Basisbandsignalverarbeitung verarbeitet werden.

5. Basisbandsignalverarbeitungsmodul (11) nach Anspruch 4, wobei die vorgegebenen Codes Kommacodes sind.

6. Basisbandsignalverarbeitungsmodul (11) nach einem der Ansprüche 1 bis 5, wobei die durch das Steuermodul ausgeführte Basisbandsignalverarbeitung eine 8B/10B-Codierung aufweist.

7. Basisbandsignalverarbeitungsmodul (11) nach einem der Ansprüche 1 bis 6, wobei das Basisbandverarbeitungsmodul (11) als in einem Einschub montiertes Basisband-Board bereitgestellt wird.

8. Basisbandgerät (10) mit:
einem Hochfrequenzsignalverarbeitungsmodul (13, 14, 15), das dazu geeignet ist, eine Hochfrequenzsignalverarbeitung auszuführen; und
einem mit dem Hochfrequenzsignalverarbeitungsmodul kommunizierenden Basisbandsignalverarbeitungsmodul (11) nach Anspruch 1.

9. Basisbandgerät (10) nach Anspruch 8, ferner mit einem Auswahl-/Multiplex-/Demultiplexmodul (101), das zwischen dem Basisbandsignalverarbeitungsmodul (11) und dem Hochfrequenzsignalverarbeitungsmodul (13, 14, 15) separat bereitgestellt wird, wobei das Auswahl-/Multiplex-/Demultiplexmodul (101) sowohl mit dem Basisbandsignalverarbeitungsmodul (11) als auch mit dem Hochfrequenzsignalverarbeitungsmodul (13, 14, 15) verbunden ist, und wobei das Auswahl-/Multiplex-/Demultiplexmodul (101) dazu geeignet ist, die Auswahl, das Multiplexen und das Demultiplexen von Signalen zwischen dem Basisbandsignalverarbeitungsmodul (11) und dem Hochfrequenzsignalverarbeitungsmodul (13, 14, 15) zu steuern.

10. Basisbandgerät (10) nach Anspruch 8 oder 9, wobei das Steuermodul ferner aufweist:
eine CPU (58), die dazu geeignet ist, das Steuersignal zu übertragen und ein Steuersignal zu empfangen, wobei die Steuersignale für eine Inter-CPU-Kommunikation mit mindestens einer anderen CPU des Hochfrequenzsignalverarbeitungsmoduls (13, 14, 15) bzw. der verschiedenen Basisbandsignalverarbeitungsmodule (12) über mindestens eine Schnittstelle unter der ersten Schnittstelle (16), der zweiten Schnittstelle (17) und der dritten Schnittstelle (18) dienen.

11. Basisbandgerät (10) nach Anspruch 10, wobei die Steuersignale mit den Signalen gemultiplext werden, die durch die Basisbandsignalverarbeitung verarbeitet und über mindestens eine Schnittstelle unter der ersten Schnittstelle (16), der zweiten Schnittstelle (17) und der dritten Schnittstelle (18) übertragen und empfangen werden.

12. Basisbandgerät (10) nach Anspruch 8, 9, 10 oder 11, wobei das Steuermodul dazu geeignet ist, vorgegebene Codes als Rahmentaktsignale zusammen mit den Signalen zu multiplexen, die durch die Basisbandsignalverarbeitung verarbeitet werden.

13. Basisbandgerät (10) nach Anspruch 12, wobei die vorgegebenen Codes Kommacodes sind.

14. Basisbandgerät (10) nach einem der Ansprüche 8 bis 13, wobei die durch das Steuermodul ausgeführte Basisbandsignalverarbeitung eine 8B/10B-Codierung aufweist.

15. Basisbandgerät (10) nach einem der Ansprüche 8 bis 14, wobei das Basisbandverarbeitungsmodul (11) als in einem Einschub montiertes Basisband-Board bereitgestellt wird.

16. Downlink-Signalverarbeitungsverfahren für ein Basisbandsignalverarbeitungsmodul (11), wobei das Verfahren die Schritte aufweist:
Empfangen eines ersten Signals von einem ersten externen Basisbandsignalverarbeitungsmodul am Basisbandsignalverarbeitungsmodul (11);
Empfangen eines zweiten Signals von inneren Schaltungen des Basisbandsignalverarbeitungsmoduls (11) am Basisbandsignalverarbeitungsmodul (11);
Auswählen und Kombinieren (204) des vom ersten externen Basisbandsignalverarbeitungsmodul empfangenen ersten Signals und des von den inneren Schaltungen des Basisbandsignalverarbeitungsmoduls (11) empfangenen zweiten Signals;
Umwandeln eines Formats (209) des kombinierten Signals zum Bereitstellen eines umgewandelten Signals;
Multiplexen (210) des umgewandelten Signals zusammen mit einem Steuersignal; und
Übertragen des gemultiplexten Signals.

17. Uplink-Signalverarbeitungsverfahren für ein Basisbandsignalverarbeitungsmodul (11), wobei das Verfahren die Schritte aufweist:
Empfangen eines ersten Signals von einem externen Basisbandsignalverarbeitungsmodul am Basisbandsignalverarbeitungsmodul (11);
Empfangen eines zweiten Signals von einem Hochfrequenzsignalverarbeitungsmodul (13, 14, 15) am Basisbandsignalverarbeitungsmodul (11);
Auswählen und Kombinieren (303) des vom externen Basisbandsignalverarbeitungsmodul empfangenen ersten Signals und des vom Hochfrequenzsignalverarbeitungsmodul (13, 14, 15) empfangenen zweiten Signals;
Umwandeln eines Formats (304) des kombinierten Signals zum Bereitstellen eines umgewandelten Signals;
Multiplexen (305) des umgewandelten Signals zusammen mit einem Steuersignal; und
Übertragen des gemultiplexten Signals.

18. Verfahren nach Anspruch 16 oder 17, wobei das Basisbandsignalverarbeitungsmodul (11) als in einem Einschub montiertes Basisband-Board bereitgestellt wird.

## Revendications

1. Module (11) de traitement de signaux en bande de base, comprenant :
une première interface (16) qui est configurée pour être connectée à un module (13, 14, 15) de traitement de signaux en fréquences radio, qui est à même d'effectuer un traitement de signaux en fréquences radio ;
une deuxième interface (17) et une troisième interface (18) qui sont configurées pour être connectées à différents modules (12) de traitement de signaux en bande de base ; et
un module de commande qui est à même de transmettre des signaux qui ont été traités par un traitement de signaux en bande de base par le module de commande et de recevoir des signaux qui sont traités par le traitement de signaux en bande de base effectué par le module de commande à partir d'au moins un des modules (13, 14, 15) de traitement de signaux en fréquences radio via la première interface (16) et un des différents modules (12) de traitement de signaux en bande de base via la deuxième interface (17), et qui est à même de relayer, via le troisième interface (18), des signaux parmi les signaux transmis et reçus via la première interface (16) ou la deuxième interface (17), qui doivent être traités par le traitement de signaux en bande de base effectué par un autre desdits différents modules (12) de traitement de signaux en bande de base ; ledit module de commande comprenant :
des moyens (55, 56) pour combiner un signal reçu dudit un différent module (12) de traitement de signaux en bande de base et un signal reçu de circuits internes du module (11) de traitement en bande de base ou un signal reçu dudit au moins un module (13, 14, 15) de traitement de signaux en fréquences radio ;
des moyens (27, 50) pour convertir un format dudit signal combiné pour fournir un signal converti ;
des moyens (28, 51) pour multiplexer ledit signal converti conjointement avec un signal de commande ; et
des moyens pour transmettre ledit signal multiplexé.

2. Module (11) de traitement de signaux en bande de base selon la revendication 1, dans lequel le module de commande comprend en outre :
une unité centrale CPU (58) qui est à même de transmettre ledit signal de commande et de recevoir un signal de commande, les signaux de commande étant à même d'assurer une communication entre CPU avec au moins une autre CPU dudit module (13, 14, 15) de traitement de signaux en fréquences radio et desdits différents modules (12) de traitement de signaux en bande de base, respectivement, via au moins l'une de ladite première interface (16), de ladite deuxième interface (17) et de ladite troisième interface (18).

3. Module (11) de traitement de signaux en bande de base selon la revendication 2, dans lequel lesdits signaux de commande sont multiplexés avec lesdits signaux qui sont traités par le traitement de signaux en bande de base et transmis et reçus via au moins l'une de ladite première interface (16), de ladite deuxième interface (17) et de ladite troisième interface (18).

4. Module (11) de traitement de signaux en bande de base selon la revendication 1, 2 ou 3, dans lequel le module de commande est à même de multiplexer des codes prédéterminés sous la forme de signaux de synchronisation de trame conjointement avec les signaux qui sont traités par le traitement de signaux en bande de base.

5. Module (11) de traitement de signaux en bande de base selon la revendication 4, dans lequel les codes prédéterminés sont des codes à virgule.

6. Module (11) selon l'une quelconque des revendications 1 à 5, dans lequel le traitement de signaux en bande de base effectué par le module de commande comprend un codage de 8B/10B.

7. Module (11) selon l'une quelconque des revendications 1 à 6, dans lequel le module (11) de traitement de signaux en bande de base est conçu sous la forme d'un panneau à bande de base qui est monté sur une étagère.

8. Equipement à bande de base (10), comprenant :
un module (13, 14, 15) de traitement de signaux en fréquences radio qui est à même d'effectuer un traitement de signaux en fréquences radio ; et
un module (11) de traitement de signaux en bande de base selon la revendication 1 en communication avec le module de traitement de signaux en fréquence radio.

9. Equipement à bande de base (10) selon la revendication 8, comprenant en outre un module (101) de sélection/multiplexage/- démultiplexage, qui est séparément aménagé entre le module (11) de traitement de signaux en bande de base et le module (13, 14, 15) de traitement de signaux en fréquences radio, ledit module (101) de sélection/multiplexage/démultiplexage étant connecté à la fois audit module (11) de traitement de signaux en bande de base et au module (13, 14, 15) de traitement de signaux en fréquences radio, ledit module (101) de sélection/multiplexage/démultiplexage étant à même de commander la sélection, le multiplexage et le démultiplexage de signaux entre le module (11) de traitement de signaux en bande de base et le module (13, 14, 15) de traitement de signaux en fréquences radio.

10. Equipement à bande de base (10) selon la revendication 8 ou 9, dans lequel le module de commande comprend par ailleurs :
une unité centrale CPU (58) qui est à même de transmettre ledit signal de commande et de recevoir un signal de commande, les signaux de commande étant à même d'assurer une communication entre CPU avec au moins une autre CPU dudit module (13, 14, 15) de traitement de signaux en fréquences radio et desdits différents modules (12) de traitement de signaux en bande de base, respectivement, via au moins l'une de ladite première interface (16), de ladite deuxième interface (17) et de ladite troisième interface (18).

11. Equipement à bande de base (10) selon la revendication 10, dans lequel lesdits signaux de commande sont multiplexés avec lesdits signaux qui sont traités par le traitement de signaux en bande de base et transmis et reçus via au moins l'une de ladite première interface (16), de ladite deuxième interface (17) et de ladite troisième interface (18).

12. Equipement à bande de base (10) selon la revendication 8, 9, 10 ou 11, dans lequel le module de commande est à même de multiplexer des codes prédéterminés sous la forme de signaux de synchronisation de trame conjointement avec les signaux qui sont traités par le traitement de signaux en bande de base.

13. Equipement à bande de base (10) selon la revendication 12, dans lequel les codes prédéterminés sont des codes à virgule.

14. Equipement à bande de base (10) selon l'une quelconque des revendications 8 à 13, dans lequel le traitement de signaux en bande de base effectué par le module de commande comprend un codage de 8B/10B.

15. Equipement à bande de base (10) selon l'une quelconque des revendications 8 à 14, dans lequel le module (11) de traitement de signaux en bande de base est conçu sous la forme d'un panneau à bande de base qui est monté sur une étagère.

16. Procédé de traitement de signaux descendants d'un module (11) de traitement de signaux en bande de base, le procédé comprenant les étapes consistant à :
recevoir, dans le module (11) de traitement de signaux en bande de base, un premier signal issu d'un premier module externe de traitement de signaux en bande de base ;
recevoir, dans le module (11) de traitement de signaux en bande de base, un second signal issu de circuits internes du module (11) de traitement de signaux en bande de base ;
sélectionner et combiner (204) le premier signal reçu du premier module externe de traitement de signaux en bande de base et ledit second signal reçu des circuits internes du module (11) de traitement de signaux en bande de base ;
convertir un format (209) dudit signal combiné pour fournir un signal converti ;
multiplexer (210) ledit signal converti conjointement avec un signal de commande ; et
transmettre ledit signal multiplexé.

17. Procédé de traitement de signaux montants d'un module (11) de traitement de signaux en bande de base, le procédé comprenant les étapes consistant à :
recevoir, dans le module (11) de traitement de signaux en bande de base, un premier signal issu d'un module externe de traitement de signaux en bande de base ;
recevoir, dans le module (11) de traitement de signaux en bande de base, un second signal issu d'un module (13, 14, 15) de traitement de signaux en fréquences radio ;
sélectionner et combiner (303) le premier signal reçu dudit module externe de traitement de signaux en bande de base et le second signal reçu du module (13, 14, 15) de traitement de signaux en fréquences radio ;
convertir un format (304) dudit signal combiné pour fournir un signal converti ;
multiplexer (305) ledit signal converti conjointement avec un signal de commande ; et
transmettre ledit signal multiplexé.

18. Procédé selon la revendication 16 ou 17, dans lequel le module (11) de traitement de signaux en bande de base est fourni sous la forme d'un panneau à bande de base qui est monté sur une étagère.
